# EUROPEAN PATENT SPECIFICATION

(11) **EP 2 071 777 B1**
(45) Date of publication and mention of the grant of the patent: **28.04.2010**
(21) Application number: 07291523.4
(22) Date of filing: 13.12.2007
(51) Int. Cl.: H04L 12/56, H04L 29/08

(54) **Method of transmitting packets**
Verfahren zum Übertragen von Paketen
Procédé de transmission de paquets

(43) Date of publication of application: 17.06.2009
(73) Proprietor: Alcatel Lucent, 75008 Paris (FR)
(72) Inventor: Mortensen, Ivar, Dr.-Ing., 70499 Stuttgart (DE); Neustadt, Alf, Dipl.-Ing., 70180 Stuttgart (DE); Schmidt, Joachim, Dipl.-Ing., 70469 Stuttgart (DE); Staiger, Wolfgang, Dipl.-Ing., 72827 Wannweil (DE)
(74) Representative: Schmidt, Werner Karl

(56) References cited:
- WO-A-99/60755
- US-A1- 2001 033 583
- US-A1- 2006 095 944

## Description

The present invention relates to a method of transmitting packets via a packet-based network, and a central scheduler to support said method.

The transmission of real-time media over a packet-based network poses high requirements to the time management. Even slight delays in the transmission of real-time packets, e.g., audio or video, quickly lead to an unacceptable deterioration of a predefined QoS (= Quality of Service).

In a packet-based system, a device receiving real-time packets (VoIP telephone, cell phone, video receiver, multi-media device) usually processes the received packets only at a series of fixed instants in time, so-called acceptance times (VoIP = Voice over IP; IP = Internet Protocol). Therefore, the dispatch schedule of the packets sent from a sending device must be time-aligned with these acceptance times at the receiver. If the transmitted packets arrive at the receiver just before an acceptance time, they will be processed after a short wait time. However, if the transmitted packets arrive at the receiver just after an acceptance time, the packets will have to wait for almost an entire inter-acceptance period until they are accepted at the following acceptance time.

To react to a long wait time of a packet at the receiver, a feedback mechanism from the receiver to the sender may be used to provide a rearranging of the sending schedule at the sender. By means of this feedback mechanism, the sending schedule at the sender can be brought in time alignment with the acceptance schedule at the receiver so that the packets are accepted at the receiver with a minimum wait time. An RTCP-based feedback to reduce end-to-end delay through the use of time alignment between a source and a receiver is described by T. Taylor (ed.) et al., "Time Alignment Using RTCP Feedback", May 2006, http://tools.ietf.org/html/draft-taylor-avt-time-align-00 (RTCP = Real-Time Control Protocol).

The above described issues are also encountered in any system containing equipment to perform a transmission of two or more circuit switched channels over a packet network where two or more of these channels must be time aligned to compensate for changing delay and/or clock drift.

Inside a GSM BSS, the transcoded voice channels are transmitted between the "Transcoder" and the BTS (GSM = Global System for Mobile Telecommunications; BSS = Base Station System; BTS = Base Transceiver Station). With the feature "IP transmission in the BSS" these circuit-switched (= CS) channels must be bundled and sent over the IP network, These channels experience a varying delay over the IP network resulting from changing load conditions, and classical clock drift between the two devices, i.e., the Transcoder and the BTS. In particular the steadily changing number of active channels inside a BTS leads to a large variation of the experienced delay of an IP packet carrying the payload of a CS channel. It is of major interest to minimise the delay of each channel so as to minimise the voice-delay experienced by the end-user.

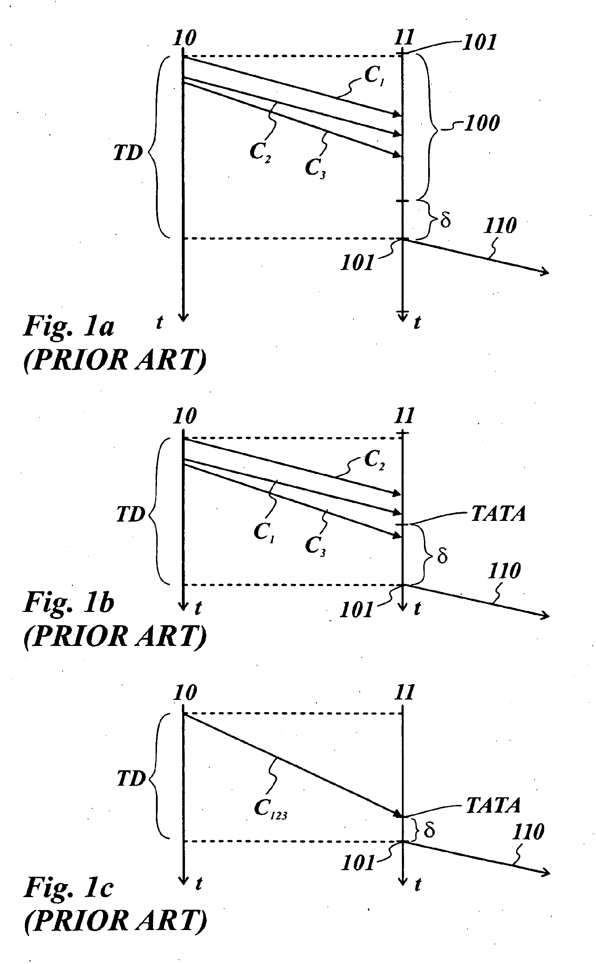

Prior art proposes three approaches to this problem. The first - trivial - solution is to provide no time alignment at all. Instead, a large enough buffer at the receiver is used. Fig. 1a shows as an example of this first approach a message flow diagram with the time axis t indicated by the vertically downward pointing arrows. A sender 10 transmits packets via channels C1, C2, C3 through a packet-based network to a receiver 11. The receiver 11 collects the incoming packets, e.g., in a buffer, and processes them at pre-defined processing instants 101, e.g., forwarding 110 the packets together to another entity. The period between two processing instants 101 consists of a transmission period 100 available for the transmission of the packets through the packet-based network and a margin δ needed for transmission delay jitter. The transmission period 100 is chosen sufficiently long so that all packets will certainly have arrived at the receiver 11 at the processing instant 101. The disadvantage of this approach is the high transmission delay TD, defined as the time period between the dispatch of the first packet from the sender 10 and the following processing instant 101.

The second solution is to let each single channel C1, C2, C3 have its independent time-alignment loop where a feedback loop tries to minimise the delay. Fig. 1b shows as an example of this second approach a message flow diagram in analogy to Fig. 1 a. The feedback loop, a so-called time alignment loop, defines a time alignment loop target TATA, i.e., a preferred instant when all packets should have arrived at the receiver 11 in order to minimise the transmission delay TD. However, this leads to a high jitter because of the "destructive" dependence between the channels, and so consequently to a high transmission delay TD.

The third solution is to use only one loop to time align all users inside one "bundle". With bundle, the group of channels belonging to a point-to-point link is meant, where the time alignment is performed between these end-points. This would be the typical solution for a transmission over a link with a very high bandwidth. Fig. 1c shows as an example of this third approach another message flow diagram in analogy to Fig. 1a. The sending instant of the bundle C123, comprising a group of channels C1, C2, C3, is time aligned to meet the time alignment loop target TATA. Again, the third solution is not optimal in the case where the bandwidth available for transmission is in the same order of magnitude as the transmission considered because all users would experience the same transmission delay TD, which is the longest necessary amongst the channels C1, C2, C3.

US 2006/0095944 A1 describes a method of transmitting video across a network interconnection from a source to a destination comprising encoding said video at a network application layer at said source, providing a portion of said encoded video comprising multiple data packets to a lower network layer than said application layer at said source, said lower network layer capable of providing a plurality of said multiple data packets to said destination in an order different than the order that said multiple data packets are provided from said application layer to said lower network layer, receiving a feedback packet at said source; and adapting said encoding of said video based upon estimating the bandwidth of said network interconnection based upon said receiving said feedback packet at said source.

WO 99/60755 describes a method and an apparatus for transfer of real time signals over packet networks. This invention allows routers in a digital communications network, such as the Internet, to be given the time awareness that is necessary for timely transfer of real time signals in the form of digital data packets. Timing information generated at the source of the signal is included in the packets in the form of first and second time stamps, which are used by network routers to establish dispatch deadlines by which the packets must be forwarded to ensure time-faithful reconstruction of the real time signal at the destination. The same timing information can be used at the destination to synchronise the clock for presentation of the real time signal to the source clock. The first and second time stamps (a differential time and a dispatch time) are derived by a transmitter unit from a counter that counts pulses from an oscillator that most advantageously is locked to an integer multiple or a fraction of a universally available time measure. Assuming that the same time measure, or at least a very near replica, is available at routers in the network and at destinations connected to the network, the time stamps marked in the packets can be used by routers to effect scheduling for timely dispatch of the packets.

It is the object of the present invention to provide an improved multi-channel time alignment.

The object of the present invention is achieved by a method of transmitting packets in corresponding channels via a packet-based network from a first node to a second node at defined sending instants, each of the packets carrying a payload of real-time data from at least one of two or more real-time connections, whereby the packets, when arriving after respective transmission times through the network at the second node at respective arrival instants, must wait for respective buffer times until the second node forwards the real-time data of the packets at respective pre-scheduled processing times, whereby the method comprises the steps of receiving, by a central scheduler, data about the number of channels and the respective pre-scheduled processing times associated with the channels, analysing by the central scheduler the received data and data about a total bandwidth available for the channels, establishing by the central scheduler, based on a result of said analysis, a set of target arrival instants where at least one of the target arrival instants deviates from the respective pre-scheduled processing times, feeding, by the central scheduler, time alignment loops with the established set of target arrival instants whereby each channel of the two or more channels is associated with a respective one of said time alignment loops, and providing, by the time alignment loops, the first node with control messages on the defined sending instants to change the defined sending instants so that the arrival instants of the assigned packets meet the target arrival instants. The object of the present invention is further achieved by a central scheduler for supporting a transmission of packets in corresponding channels via a packet-based network from a first node to a second node at defined sending instants, each of the packets carrying a payload of real-time data from at least one of two or more real-time connections, whereby the packets, when arriving after respective transmission times through the network at the second node at respective arrival instants, must wait for respective buffer times until the second node forwards the real-time data of the packets at respective pre-scheduled processing times, whereby the central scheduler comprises a control unit adapted to receive data about the number of channels and the respective pre-scheduled processing times associated with the channels, analyse the received data and data about a total bandwidth available for the channels, based on a result of said analysis, establish a set of target arrival instants where at least one of the target arrival instants deviates from the respective pre-scheduled processing times, feed time alignment loops with the established set of target arrival instants, each channel of the two or more channels being associated with a respective one of said time alignment loops, for providing, by the time alignment loops, the first node with control messages on the defined sending instants to change the defined sending instants so that the arrival instants of the assigned packets meet the target arrival instants.

The main idea underlying the present invention is to provide a low average transmission delay over two or more real-time channels that use the same bandwidth resources.

Any network where two or more classical circuit switched (= CS) channels (voice, video, multimedia, etc.) are sent over a packet network with differing conditions like transmission delay, clock drift, etc. tends to show a behaviour where a decision that is good for one channel may be bad for another channel because of the dependence between the channels. Letting each channel being controlled independently will lead to a high jitter and consequently a high average delay. The present invention avoids these drawbacks by implementing a higher-ranking control function which controls all the individual time alignment loops.

The present invention enhances the known time alignment techniques by spreading out the sending instants of each channel so as to minimise the time the payload of each channel is spending in transmission queues.

Moreover, the present invention proposes to handle the time alignment loop of each channel independently so as to have a robust algorithm. Only the aimed-at arrival instant of each channel, i.e., the so-called time alignment loop target TATA, is co-ordinated between the channels at the receiver.

Further advantages are achieved by the embodiments of the invention indicated by the dependent claims.

According to a preferred embodiment of the invention, the central scheduler defines the set of target arrival instants in a way so that a transmission delay averaged over all channels reaches a minimum. The transmission delay is the sum of the respective transmission times and the respective buffer times. In other words, the transmission delay is defined as the time period between the dispatch of a packet from a sender and a following processing instant at a receiver when the packet is processed. It is admissible that some channels experience a relatively high transmission delay while other channels experience a relatively small transmission delay; the decisive criterion is the transmission delay averaged over all channels.

According to another preferred embodiment of the invention, the central scheduler defines the set of target arrival instants in a way so that the transmission delay of each channel of the two or more channels is below a pre-defined maximum value. This embodiment makes sure that the transmission on every channel fulfils a pre-defined minimum quality level.

According to another preferred embodiment of the invention, the central scheduler defines the set of target arrival instants TATAᵢ for the N channels Cᵢ, with i = 1, ..., N and N > 1, in a way so that the target arrival instant TATA_{N} of the channel C_{N} is defined by TATA_{N} = LTA - δ, whereby LTA (= Latest Time of Arrival) is an instant when the packets of all channels Cᵢ must have arrived at the second node and δ is a margin needed for a transmission delay jitter. Then, the target arrival instants TATAⱼ of the channels Cⱼ are defined by TATAⱼ = TATAⱼ₊₁ - Yⱼ₊₁, with j = 1, ..., N-1 and whereby Yⱼ₊₁ is a function of an amount of bytes that are transferred in the channel Cⱼ₊₁. This is advantageous in the case that all packets must have arrived at the same instant LTA, i.e., the latest time of arrival is the same for all channels.

In case that all packets must arrive at different instants LTA₁, LTA₂,..., LTA_{N}, i,e., the LTA's are specific with regard to radio time slots (= RTS) and sub-channels, the central scheduler may use another calculation of the TATA's. For instance, consider N channels C₁, C₂, ..., C_{N} with individual TATA's. The LTA's may be linked in the following way: LTAᵢ = LTAᵢ₊₁ + TS, where TS represents the length of a time slot. Then, the TATA's are calculated in the following way: C_{N}: TATA_{N} = LTA_{N} + δ, where δ is a configurable parameter. Cᵢ: TATAᵢ = MAX(TATAᵢ₊₁ + Yᵢ₊₁ + δ2, LTAᵢ + 8), where Yᵢ₊₁ = K * CRTSᵢ₊₁, and CRTSᵢ₊₁ is the number of active channels on the corresponding RTS and corresponding sub-channel, and K and δ2 are configurable parameters. Here, MAX (x1, x2) represents a mathematical function which gives the maximum of x1 and x2.

In a preferred embodiment, the time alignment loops determine the sending instants independently for each channel. Each of the time alignment loops is associated with one of the channels C.

According to another preferred embodiment of the invention, the channels are divided up into a number of groups depending on criteria like latest arrival instant or the number of bytes per period per channel that must be transmitted.

Thus, one or more of the channels C₁, C₂, ..., C_{N} may comprise one or more "sub"-channels.

Preferably, the channels are divided up into a number of groups wherein each channel inside a group has an independent time alignment loop. It is also possible that some channels inside the group have a common time alignment loop. Alternatively, all channels inside the group may be controlled with the same time alignment loop.

Preferably, the central scheduler restricts the number of commands that are allowed for achieving that the arrival instants of the assigned packets meet the target arrival instants. This makes sure that the transmission of the packets is not disturbed by a disproportionately high amount of time alignment commands. At the same time, the central scheduler defines a time period before the defined target arrival instants and a time period after the defined target arrival instants. These two time periods represent a tolerance period. The central scheduler accepts packets which arrive within the tolerance range at the receiver and considers these packets as meeting the corresponding target arrival instant. Thus, the exact arrival time is allowed to differ a certain amount from the ideal value in order to keep the transmission delay caused by the time alignment processes at an insignificantly low level. As a rule of thumb, the amount of time alignment commands can be reduced if the tolerance range is increased.

Preferably, a transcoder transmits the packets via an IP network to a base transceiver station in a base station system of a mobile telecommunications architecture. The packets, when arriving after respective transmission times through the IP network at the base transceiver station at respective arrival instants, are buffered for respective buffer times in a buffer of the base transceiver station until the base transceiver station sends the real-time data of the packets at respective pre-scheduled transmission times to receiving terminal, e.g., via an air interface to mobile stations.

These as well as further features and advantages of the invention will be better appreciated by reading the following detailed description of presently preferred exemplary embodiments taken in conjunction with accompanying drawings of which:
- Fig. 2: is a block diagram showing a transmission of packets through a packet-based network according to an embodiment of the invention;
- Fig. 3: is a message flow diagram according to another embodiment of the invention message;
- Fig. 4: is a time axis with an indication of relevant points in time according to an embodiment of the invention where all channels must have arrived at the same instant;
- Fig. 5: is a time axis with an indication of relevant points in time according to an embodiment of the invention where the channels must arrive at different instants.

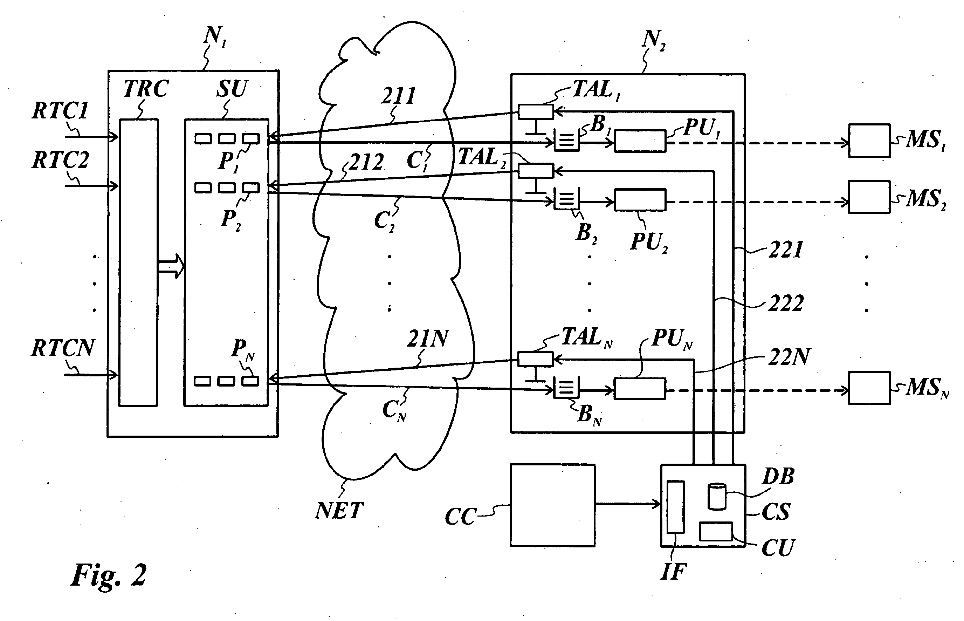

Fig. 2 shows a block diagram with an embodiment of the present invention. A first node N1 receives delay-sensitive data associated with N real-time connections RTC1, RTC2, ...RTCN, whereby N equals two or more, i.e., N > 1. The first node N1 comprises a transcoder TRC where the delay-sensitive data are converted / transcoded into packets P1, P2, ... , PN of a format that is adapted for transmission over a packet-based network NET. Then, the transcoded packets P1, P2, ..., PN are put in a transmission queue of a sending unit SU for subsequent transmission in N corresponding channels C₁, C₂, ..., C_{N} over the network NET. The packets P1, P2,..., PN are transmitted to a second node N2 at pre-defined sending instants. The sending unit SU comprises a control function that controls the sending instants individually for each of the packets P1, P2, ..., PN according to a sending schedule.

When generating the packets P1, P2, ..., PN of the corresponding N channels C₁, C₂, ..., C_{N}, it is possible that the first node N1 keeps a clear separation between the N real-time connections RTC1, RTC2, ...RTCN, e.g., that the packet P1 in the channel C₁ carries a payload of real-time data from the real-time connection RTC1, only, that the packet P2 in the channel C₂ carries a payload of real-time data from the real-time connection RTC2, only, etc. However, it is also possible that the first node N1 applies a multiplexing process to the real-time connections RTC1, RTC2, ...RTCN. That means that one or more of the packets P1, P2, ..., PN carry a multiplexed payload of real-time data from two or more connections of the real-time connections RTC1, RTC2, ...RTCN. For example, the packet P1 may carry real-time data from the real-time connections RTC₁, RTC₂ and RTC₃, the packet P2 may carry real-time data from the real-time connections RTC₂, RTC₃ and RTC₄, etc.

When the scheduled sending instant for one of the packets P1, P2, ..., PN has come, the sending unit SU sends the packet P1, P2, ..., PN in the corresponding channel C₁, C₂, ..., C_{N} via an available route of the packet network NET to a second node N2. The second node N2 comprises N buffers B1, B2, ..., BN corresponding to the channels C₁, C₂, ..., C_{N}, N processing units PU1, PU2, ..., PUN corresponding to the channels C₁, C_{2,} ..., C_{N}, and N time alignment loops TAL1, TAL2, ..., TALN corresponding to the channels C₁, C₂, ..., C_{N}. Upon arrival at the second node N2, the packet P1, P2, ..., PN is buffered in a buffer B1, B2, ..., BN corresponding to the channel C₁, C₂, ..., C_{N}. At respective pre-scheduled processing times, the processing unit PU1, PU2, ..., PUN acquires the packet P1, P2, ..., PN from the buffer B1, B2, ..., BN and processes it. For instance, the processing unit PU1, PU2, ..., PUN initiates the dispatch of the packet P1, P2, ..., PN to a mobile station MS1, MS2, ..., MSN.

The time alignment loops TAL1, TAL2, ..., TALN monitor the arrival instants of the packets P1, P2, ..., PN at the second node N2. The target of each of the time alignment loops TAL1, TAL2, ..., TALN is to minimise the transmission delay of the packets P1, P2, ..., PN in the corresponding channels C₁, C₂, ..., C_{N}. To this end, the time alignment loops TAL1, TAL2, ..., TALN analyse the transmission delay of the packets P1, P2, ..., PN in the corresponding channels C₁, C₂, ..., C_{N} and determine target arrival instants TATA₁, TATA₂, ..., TATA_{N} for the packets P1, P2, ..., PN in the corresponding channels C₁, C₂, ..., CN. The target arrival instants TATA₁, TATA₂, ..., TATA_{N} are chosen so that the transmission delay of the packets P1, P2, ..., PN in the corresponding channels C₁, C₂, ..., C_{N} is minimised if the arrival instants of the packets P1, P2, ... , PN are identical to the target arrival instants TATA₁, TATA₂, ..., TATA_{N}. Thus, the target arrival instants TATA₁, TATA₂, ..., TATA_{N} represent ideal, preferred arrival instants.

In accordance with the determined target arrival instants TATA₁, TATA₂, ..., TATA_{N}, the time alignment loops TAL1, TAL2, ..., TALN generate control messages 211, 212, ...,21N on the defined sending instants of the first node N1 to change the defined sending instants so that the arrival instants of the assigned packets P1, P2, ..., PN meet the target arrival instants TATA₁, TATA₂, ..., TATA_{N}. Preferably, the time alignment loops TAL1, TAL2, ..., TALN determine the control messages on the defined sending instants independently for each channel C₁,C₂, ..., C_{N}. The time alignment loops TAL1, TAL2, ..., TALN send the generated control messages 211,212, ..., 21 N to the first node N1 as a feedback via the packet network NET.

A central scheduler CS is implemented in the transmission system for providing an overall control and co-ordination mechanism of the time alignment loops TAL1, TAL2, ..., TALN. The central scheduler CS comprises an interface IF for receiving external data that serve as a basis for a generation of control and co-ordination commands 221, 222, ..., 22N provided to the time alignment loops TAL1, TAL2, ..., TALN. Moreover, the central scheduler CS comprises a control unit CU with the functions of a central processing and control unit, and a memory unit DB for storing the received external data and computer programmes to be run on the control unit CU.

The central scheduler CS is composed of one or several interlinked computers CU, i.e., a hardware platform, a software platform basing on the hardware platform and several application programs executed by the system platform formed by the software and hardware platform. The functionalities of the central scheduler CS are provided by the execution of these application programs. The application programs or a selected part of these application programs constitute a computer software product providing a control service as described in the following, when executed on the system platform. Further, such computer software product is constituted by the storage medium DB storing these application programs or said selected part of application programs.

The central scheduler CS may be provided with external data from a call control CC, for example. Said external data may comprise information about the number of channels C₁, C₂,..., C_{N}, bandwidth available for the transmission on the channels C₁, C₂, ..., C_{N}, bandwidth actually used, etc. The central scheduler CS uses at least a part of the received data as input of an algorithm to optimise the efficiency of the transmission of the packets P1, P2, ..., PN. In order to maximise the efficiency of the transmission of the packets P1, P2, ..., PN, the algorithm may be designed to minimise the overall transmission delay, averaged over all channels C₁, C₂, ..., C_{N}. Alternatively or additionaly, the algorithm may be designed to bring the transmission delay in each of the channels C₁, C₂, ..., C_{N} below a pre-defined threshold, so that in each channel C₁, C₂, ..., C_{N} a certain transmission quality and speed, respectively, is maintained.

Based on the results of the algorithm, the central scheduler CS generates the control and co-ordination commands 221, 222, ..., 22N and provides them to the time alignment loops TAL1, TAL2, ..., TALN. The time alignment loops TAL1, TAL2, ..., TALN take the received commands 221, 222, ..., 22N into account for the generation of the control messages 211, 212, ..., 21 N on the defined sending instants of the first node N1. Thus, the central scheduler CS provides a control of the overall transmission of the packets P1, P2, ..., PN.

In a GSM BSS, the first node N1 may be represented by a network node of a circuit-switched network and the second node N2 by a BTS. Also in the GSM BSS, the real-time connections RTC1, RTC2, ...RTCN are circuit-switched channels.

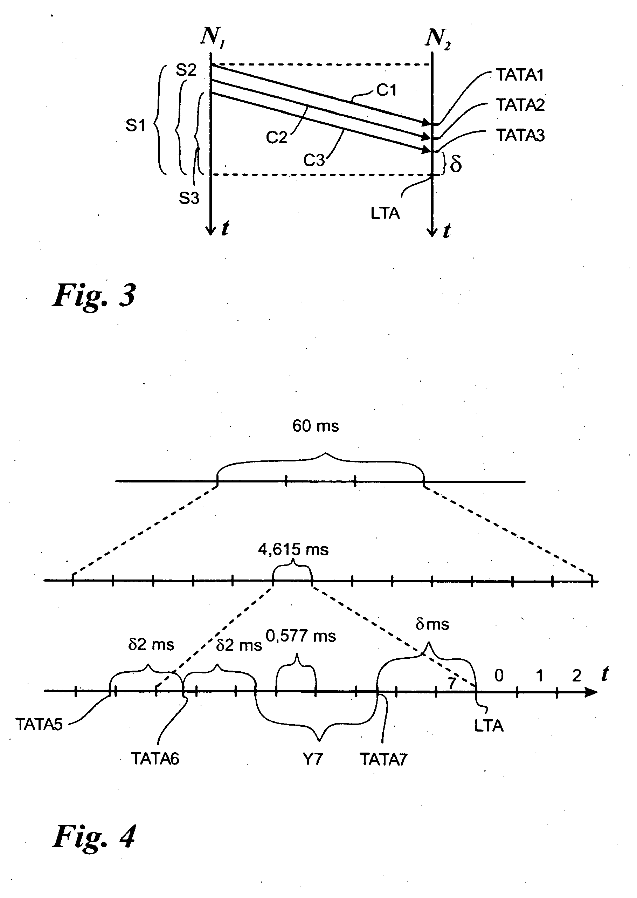

In Figure 3 we see, as another embodiment of the present invention, a message flow diagram where a first node N1 transmits real-time data in three channel "bundles" C1, C2, C3 to a second node N2. The channels gathered in a channel "bundle" may be chosen depending on criteria like "Latest Time of Arrival" (LTA) or the number of bytes per period per channel that must be transmitted. Each channel inside a group/bundle can have an independent time alignment loop or some channels can have a common loop or all channels inside the group can be controlled with the same loop. There is at least one time alignment loop per channel group, i.e., per TATA.

The time axis t is indicated by an arrow pointing downwards. In the second node N2, three different TATA's TATA1, TATA2 and TATA3 are defined where the group of channels C1 are time aligned on TATA1, the group of channels C2 on TATA2, and the group of channels C3 on TATA3. The time instants TATA are calculated relative to an instant LTA where the information must have arrived. Then TATA3 = LTA - δ, where δ is the margin needed for transmission delay jitter. TATA2 = TATA3 - Y3, where Y3 is a function of the amount of bytes that are transferred in the group of channels known as C3. And, TATA1 = TATA2 - Y2. This way, a transmission delay S1,S2,S3 is achieved in the respective channels C1, C2, C3.

Fig. 4 shows, as an embodiment of the present invention set in a GSM environment, a time axis t with an indication of relevant points in time. According to this embodiment, all channels must have arrived at the same instant LTA.

The basic GSM access scheme is Time Division Multiple Access (TDMA). The length of a GSM TDMA frame in a frequency channel is 60/13 ms ≈ 4.615 ms.

The frame is divided into 8 bursts (radio time slots, RTS) of length 15/26 ms ≈ 0.577 ms. Between the transcoder (= TC) and the BTS, a large number of voice channels are transmitted bi-directionally (up to 384 is foreseen). In the DL (= downlink) direction, i.e., from the TC to the BTS, the BTS must control the sampling instants and the corresponding sending instants of the TC remotely. This is done with explicit commands from the BTS to the TC.In the UL (= uplink) direction, i.e., from the BTS to the TC, the aforementioned control is not necessary.

In the TDM case there is no interaction between the channels, so the time alignment loops are independent for each channel (TDM = Time Division Multiplex).

The IP case, the time alignment loops must be co-ordinated. Inside the BTS there can be up to 12 independent physical entities (Transceiver Receiver Entity, TRE) that receive the DL IP signals and that control from zero to 32 voice channels. These TRE's all see the same DL "stream", and all experience the same delay.

In the IP case, we have to differentiate two cases. Fig. 4 shows the case where all channels must have arrived at the same instant, i.e., all LTA's are the same. Each TRE will calculate the same TATA's based on the same measurements. The channels are grouped into 8 groups based on the GSM radio channels, C0 to C7, also called Radio Time Slots (= RTS). The TATA's are calculated by the central scheduler in the following way:
C7: TATA7 = LTA - δ, where δ is a configurable parameter.
C6: TATA6 = TATA7 - Y7 - δ2, where Y7 = K * CRTS7, and CRTS7 is the number of active channels on RTS7 in the BTS, and K and δ2 are configurable parameters.
C5: TATA5 = TATA6 - Y6 - δ2, where Y6 = K * CRTS6, and CRTS6 is the number of active channels on RTS6 in the BTS.
etc.

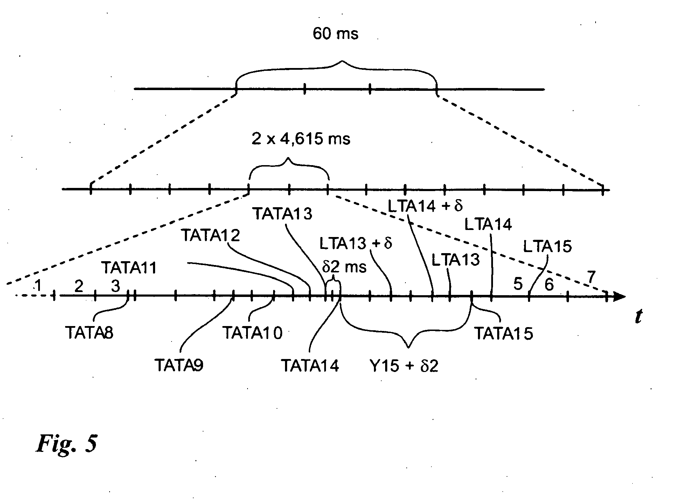

Fig. 5 shows, as an embodiment of the present invention set in a GSM environment, a time axis t with an indication of relevant points in time. According to this embodiment, the channels must arrive at different instants, i.e., the LTA's are RTS- and sub-channel-specific. This is the second case that has to be differentiated in the IP case..

Each TRE will calculate the same TATA's based on the same measurements.

The channels are grouped into 16 groups based on the GSM radio channels, C0 to C15, also called Radio Time Slots (RTS), and further based on the subchannels, SC0 and SC1. Each group of channels, C0 to C15, have their own LTA, i.e., LTA0 to LTA15. The LTA's are linked in the following way:
LTA0 = LTA1 - 0.577 ms, LTA1 = LTA2 - 0.577 ms, LTA3 = LTA2 - 0,577 ms, etc.

The TATA's are calculated in the following way:
C15: TATA15 = LTA15 - δ, where δ is a configurable parameter.
C14: TATA14 = MAX(TATA15- Y15 - δ2, LTA14 - δ), where Y15 = K *CRTS15, and CRTS15 is the number of active channels on RTS7 and sub-channel SC0 in the BTS, and K and δ2 are configurable parameters.
C13: TATA13 = MAX(TATA14 - Y14 - δ2, LTA13 - δ), where Y14 = K * CRTS14, and CRTS14 is the number of active channels on RTS6 and sub-channel SC0 in the BTS.
... etc....
C7: TATA7 = MAX(TATA8 - Y8 - δ2, LTA7 - δ), where Y8 = K * CRTSB, and CRTS8 is the number of active channels on RTS0 and sub-channel SC0 in the BTS.
C6: TATA6 = MAX(TATA7 - Y7 - δ2, LTA6 - δ), where Y7 = K *CRTS7, and CRTS7 is the number of active channels on RTS7 and sub-channel SC1 in the BTS.
... etc ...

In the embodiment shown in Fig. 5, it is assumed that CRTS15 ≠ 0; CRTS14 = CRTS13 = CRTS12 = CRTS11 = CRTS10 = 0; CRTS9 ≠ 0.

In both cases, i.e., the first case shown in Fig. 4 and the second case shown in Fig. 5, there is a time alignment loop per voice channel having as goal to control the sending instant in such a way that the arrival instant stays as close as possible to the TATA under changing conditions.

Further enhancements that may be made to the present invention may be adaptive reactions to packets that arrive too late. Preferably, it is possible that both δ and δ2 are dynamically adjusted to cope with changing jitter situations. Typically, a classical saw-tooth algorithm would be used.

## Claims

1. A method of transmitting packets (P1, P2, ..., PN) in corresponding channels (C₁, C₂, ..., C_{N}) via a packet-based network (NET) from a first node (N1) to a second node (N2) at defined sending instants, each of the packets (P1, P2, ..., PN) carrying a payload of real-time data from at least one of two or more real-time connections (RTC₁, RTC₂, ..., RTC_{N}), whereby the packets (P1, P2, ..., PN), when arriving after respective transmission times through the network (NET) at the second node (N2) at respective arrival instants, must wait for respective buffer times until the second node (N2) forwards the real-time data of the packets (P1, P2, ..., PN) at respective pre-scheduled processing times, **characterised in**
**that** the method comprises the steps of:
receiving, by a central scheduler (CS), data about the number of channels (C₁, C₂, ..., C_{N}) and the respective pre-scheduled processing times associated with the channels (C₁, C₂, ..., C_{N});
analysing by the central scheduler (CS) the received data and data about a total bandwidth available for the channels (C₁, C₂, ..., C_{N});
based on a result of said analysis, establishing by the central scheduler (CS) a set of target arrival instants (TATA₁, TATA₂, ..., TATA_{N}) where at least one of the target arrival instants (TATA₁, TATA₂, ..., TATA_{N}) deviates from the respective pre-scheduled processing times;
feeding, by the central scheduler (CS), time alignment loops (TAL1, TAL2, ..., TALN) with the established set of target arrival instants (TATA₁, TATA₂, ..., TATA_{N}) whereby each channel of the two or more channels (C₁, C₂, ..., C_{N}) is associated with a respective one of said time alignment loops (TAL1, TAL2, ..., TALN); and
providing, by the time alignment loops (TAL1, TAL2, ..., TALN), the first node (N1) with control messages (211, 212, ..., 21 N) on the defined sending instants to change the defined sending instants so that the arrival instants of the assigned packets (P1, P2, ..., PN) meet the target arrival instants (TATA₁, TATA₂, ..., TATA_{N}).

2. The method of claim 1,
**characterised in**
**that** the method further comprises the step of:
establishing the set of target arrival instants by minimising a transmission delay averaged over all channels (C₁, C₂, ..., C_{N}), whereby said transmission delay is the sum of the respective transmission times and the respective buffer times.

3. The method of claim 1,
**characterised in**
**that** the method further comprises the step of:
establishing the set of target arrival instants so that a transmission delay of each channel of the two or more channels (C₁, C₂, ..., C_{N}) is below a pre-defined maximum value, whereby said transmission delay of the channel is the sum of the respective transmission time and the respective buffer time associated with the channel (C₁, C₂, ..., C_{N}).

4. The method of claim 1,
**characterised in**
**that** the method further comprises the step of:
establishing the set of target arrival instants TATAᵢ for the N channels Cᵢ, with i = 1, ..., N and N > 1, so that the target arrival instant TATA_{N} of the channel C_{N} is defined by TATA_{N} = LTA - δ, whereby LTA is an instant when the packets of all channels Cᵢ must have arrived at the second node and δ is a margin needed for a transmission delay jitter, and the target arrival instants TATAⱼ of the channels Cⱼ are defined by TATAⱼ = TATAⱼ₊₁ - Yⱼ₊₁, with j = 1, ..., N-1 and whereby Yⱼ₊₁ is a function of an amount of bytes that are transferred in the channel Cⱼ₊₁.

5. The method of claim 1,
**characterised in**
**that** the method further comprises the step of:
determining by the time alignment loops (TAL1, TAL2, ..., TALN) the control messages (211, 212, ..., 21N) on the defined sending instants independently for each channel (C₁, C₂, ..., C_{N}).

6. The method of claim 1,
**characterised in**
**that** the method further comprises the step of:
gathering the channels (C₁, C₂, ..., C_{N}) into a number of groups depending on criteria like latest arrival instant or the number of bytes per period per channel that must be transmitted.

7. The method of claim 6,
**characterised in**
**that** the method further comprises the step of:
gathering the channels (C₁, C₂, ..., C_{N}) into a number of groups wherein each channel inside a group has an independent time alignment loop (TAL1, TAL2, ..., TALN) or some channels inside the group have a common time alignment loop (TAL1, TAL2, ..., TALN) or all channels inside the group are controlled with the same time alignment loop (TAL1, TAL2, ..., TALN).

8. The method of claim 1,
**characterised in**
**that** the method further comprises the step of:
limiting the number of commands for achieving that the arrival instants of the assigned packets (P1, P2, ..., PN) meet the target arrival instants (TATA₁, TATA₂, ..., TATA_{N});
defining a tolerance period extending before and after the target arrival instants (TATA₁, TATA₂, ..., TATA_{N}); and
considering an arrival instant of a packet (P1, P2, ..., PN) to meet the corresponding target arrival instant (TATA₁, TATA₂, ..., TATA_{N}) if its arrival instant lies within said tolerance range.

9. The method of claim 1,
**characterised in**
**that** the method further comprises the step of:
transmitting the packets (P1, P2, ..., PN) via an IP network (NET) from a transcoder (N1) to a base transceiver station (N2) in a base station system of a mobile telecommunications architecture, whereby the packets (P1, P2, ..., PN), when arriving after respective transmission times through the IP network (NET) at the base transceiver station (N2) at respective arrival instants, are buffered for respective buffer times in a buffer (B1, B2, ..., BN) of the base transceiver station (N2) until the base transceiver station (N2) sends the real-time data of the packets (P1, P2, ..., PN) at respective pre-scheduled transmission times to a receiving terminal (MS1, MS2, ..., MSN).

10. A central scheduler (CS) for supporting a transmission of packets (P1, P2, ..., PN) in corresponding channels (C₁, C₂, ..., C_{N}) via a packet-based network (NET) from a first node (N1) to a second node (N2) at defined sending instants, each of the packets (P1, P2, ..., PN) carrying a payload of real-time data from at least one of two or more real-time connections (RTC₁, RTC₂, ..., RTC_{N}), whereby the packets (P1, P2, ..., PN), when arriving after respective transmission times through the network (NET) at the second node (N2) at respective arrival instants, must wait for respective buffer times until the second node (N2) forwards the real-time data of the packets (P1, P2, ..., PN) at respective pre-scheduled processing times,
**characterised in**
**that** the central scheduler (CS) comprises a control unit (CU) adapted to receive data about the number of channels (C₁, C₂, ..., C_{N}) and the respective pre-scheduled processing times associated with the channels (C₁, C₂, ..., C_{N}), analyse the received data and data about a total bandwidth available for the channels (C₁, C₂, ..., C_{N}), based on a result of said analysis, establish a set of target arrival instants (TATA₁, TATA₂, ..., TATA_{N}) where at least one of the target arrival instants (TATA₁, TATA₂, ..., TATA_{N}) deviates from the respective pre-scheduled processing times, feed time alignment loops (TAL1, TAL2, ..., TALN) with the established set of target arrival instants (TATA₁, TATA₂, ..., TATA_{N}), each channel of the two or more channels (C₁, C₂, ..., C_{N}) being associated with a respective one of said time alignment loops (TAL1, TAL2, ..., TALN), for providing, by the time alignment loops (TAL1, TAL2, ..., TALN), the first node (N1) with control messages (211, 212, ..., 21 N) on the defined sending instants to change the defined sending instants so that the arrival instants of the assigned packets (P1, P2, ..., PN) meet the target arrival instants (TATA₁, TATA₂,..., TATA_{N}).

## Patentansprüche

1. Ein Verfahren zum Übertragen von Paketen (P1, P2, ..., PN) in entsprechenden Kanälen (C₁, C₂, ..., C_{N}) über ein paketbasiertes Netzwerk (NET) von einem ersten Knoten (N₁) an einen zweiten Knoten (N₂) zu definierten Sendezeitpunkten, wobei ein jedes der Pakete (P1, P2, ..., PN) Echtzeit-Nutzdaten mindestens einer von zwei oder mehreren Echtzeitverbindungen (RTC₁, RTC₂, RTC_{N}) transportiert, wobei die Pakete (P1, P2, ..., PN), wenn sie nach den entsprechenden Übertragungszeiten über das Netzwerk (NET) zu den entsprechenden Ankunftszeitpunkten an dem zweiten Konten (N2) eintreffen, während entsprechenden Pufferzeiten warten müssen, bis der zweite Knoten (N2) die Echtzeitdaten der Pakete (P1, P2, ..., PN) zu den jeweiligen vorgeplanten Verarbeitungszeiten weiterleitet,
**dadurch gekennzeichnet,**
**dass** das Verfahren die folgenden Schritte umfasst:
Empfangen, an einem zentralen Scheduler (CS), von Daten in Bezug auf die Anzahl von Kanälen (C₁, C₂, ... C_{N}) und die entsprechenden den Kanälen (C₁, C₂, ... C_{N}) zugeordneten vorgeplanten Verarbeitungszeiten; Analysieren, durch den zentralen Scheduler (CS), der empfangenen Daten und der Daten in Bezug auf eine für die Kanäle (C₁, C₂,... C_{N}) verfügbare Gesamtbandbreite;
auf der Basis des Ergebnisses der besagten Analyse, Erstellen, durch den zentralen Scheduler (CS), eines Satzes von Soll-Ankunftszeiten (TATA₁, TATA₂, ..., TATA_{N}), wobei mindestens eine der Soll-Ankunftszeiten (TATA₁, TATA₂, .... TATA_{N}) von den jeweiligen vorgeplanten Verarbeitungszeiten abweicht;
Einspeisen, durch den zentralen Scheduler (CS), von Zeitlagensteuerschleifen (TAL₁, TAL₂, ..., TALN) mit dem erstellen Satz von Soll-Ankunftszeiten (TATA₁, TATA₂, ..., TATA_{N}), wobei jeder Kanal der zwei oder mehreren Kanäle (C₁, C₂, ..., C_{N}) mit einer entsprechenden der besagten Zeitlagensteuerschleifen (TAL1, TAL2, ... TALN) assoziiert ist; und
Versorgen, durch die Zeitlagensteuerschleifen (TAL1, TAL2, ..., TALN), des ersten Knotens (N1) mit Steuernachrichten (211, 212, ..., 21N) in Bezug auf die definierten Sendezeitung, um die definierten Sendezeiten derart zu ändern, dass die Ankunftszeiten der zugeteilten Pakete (P1, P2, ... PN) den Soll-Ankunftszeiten (TATA₁, TATA₂, ..., TATA_{N}) entsprechen.

2. Das Verfahren nach Anspruch 1,
**dadurch gekennzeichnet,**
**dass** das Verfahren weiterhin den folgenden Schritt umfasst:
Erstellen eines Satzes von Soll-Ankunftszeiten durch Minimieren einer über alle Kanäle gemittelten Übertragungsverzögerung (C₁, C₂, ... C_{N}), wobei die besagte Übertragungsverzögerung die Summe der jeweiligen Übertragungszeiten und der jeweiligen Pufferzeiten ist.

3. Das Verfahren nach Anspruch 1,
**dadurch gekennzeichnet,**
**dass** das Verfahren weiterhin den folgenden Schritt umfasst:
Erstellen des Satzes von Soll-Ankunftszeiten, so dass eine Übertragungsverzögerung eines jeden Kanals der zwei oder mehreren Kanäle (C₁, C₂, ..., C_{N}) unter einem vordefinierten Höchstwert liegt, wobei die besagte Übertragungsverzögerung des Kanals die Summe der jeweiligen Übertragungszeit und der jeweiligen mit dem Kanal (C₁, C₂, ..., C_{N}) assoziierten Pufferzeit ist.

4. Das Verfahren nach Anspruch 1,
**dadurch gekennzeichnet,**
**dass** das Verfahren weiterhin den folgenden Schritt umfasst:
Erstellen des Satzes von Soll-Ankunftszeiten TATAᵢ für die N Kanäle Cᵢ, wobei i = 1, ... N und N > 1 ist, so dass der Soll-Ankunftszeitupunkt TATA_{N} des Kanals C_{N} durch TATA_{N} = LTA - δ definiert ist, wobei LTA ein Zeitpunkt ist, zu welchem die Pakete aller Kanäle Cᵢ an dem zweiten Knoten angekommen sein müssen, und δ eine für einen Übertragungsverzögerungs-Jitter erforderliche Reserve ist, und die Soll-Ankunftszeiten TATAⱼ der Kanäle Cⱼ durch TATAⱼ= TATAⱼ₊₁ - Yⱼ₊₁ definiert sind, wobei j = 1, ..., N-1, und wobei Yⱼ₊₁ eine Funktion einer Anzahl von Bytes ist, welche im Kanal Cⱼ₊₁ übertragen werden.

5. Das Verfahren nach Anspruch 1,
**dadurch gekennzeichnet,**
**dass** das Verfahren weiterhin den folgenden Schritt umfasst:
Bestimmen, durch die Zeitlagensteuerschleifen (TAL1, TAL2, ..., TALN), der Steuernachrichten (211, 212, ..., 21 N) in Bezug auf die definierten Sendezeitpunkte für jeden Kanal (C₁, C₂,..._{CN}) einzeln.

6. Das Verfahren nach Anspruch 1,
**dadurch gekennzeichnet,**
**dass** das Verfahren weiterhin den folgenden Schritt umfasst:
Zusammenfassen der Kanäle (C₁, C₂, ..., C_{N}) in eine Anzahl von Gruppen in Abhängigkeit von Kriterien wie der letzte Ankunftszeitpunkt oder die Anzahl von Bytes pro Periode pro Kanal, welche zu übertragen sind.

7. Das Verfahren nach Anspruch 6,
**dadurch gekennzeichnet,**
**dass** das Verfahren weiterhin den folgenden Schritt umfasst:
Zusammenfassen der Kanäle (C₁, C₂, ..., C_{N}) in eine Anzahl von Gruppen, wobei jeder Kanal innerhalb einer Gruppe eine unabhängige Zeitlagensteuerschleife (TAL1, TAL2, ..., TALN) hat oder mehrere Kanäle innerhalb der Gruppe eine gemeinsame Zeitlagensteuerschleife (TAL1, TAL2, ..., TALN) haben oder alle Kanäle innerhalb der Gruppe mit derselben Zeitlagensteuerschleife (TAL1, TAL2, ..., TALN) gesteuert werden.

8. Das Verfahren nach Anspruch 1,
**dadurch gekennzeichnet,**
**dass** das Verfahren weiterhin den folgenden Schritt umfasst:
Begrenzen der Anzahl der Befehle, um zu erreichen, dass die Ankunfstszeitpunkte der zugeteilten Pakete (P1, P2, ..., PN) den Soll-Ankunftszeiten (TATA₁, TATA₂, ..., TATA_{N}) entsprechen;
Definieren einer Verlängerung der Toleranzzeiten vor und nach den Soll-Ankunftszeiten (TATA₁, TATA₂, ..., TATA_{N}); und
Betrachten, dass ein Ankunftszeitpunkt eines Pakets (P1, P2, ..., PN) der jeweiligen Soll-Ankunftszeitpunkt (TATA₁, TATA₂, ..., TATA_{N}) entspricht, wenn dessen Ankunftszeitpunkt innerhalb des besagten Toleranzbereichs liegt.

9. Das Verfahren nach Anspruch 1,
**dadurch gekennzeichnet,**
**dass** das Verfahren weiterhin den folgenden Schritt umfasst:
Übertragen der Pakete (P1, P2, ..., PN) über ein IP-Netzwerk (NET) von einem Transcoder (N1) an eine GSM-Basisstation (N2) in einem Basisstationssystem einer mobilen Telekommunikationsarchitektur, wobei die Pakete (P1, P2, ..., PN), wenn sie nach den jeweiligen Übertragungszeiten über das IP-Netzwerk (NET) zu den jeweiligen Ankunftszeiten an der GSM-Basisstation (N2) eintreffen, während entsprechenden Pufferzeiten in einem Pufferspeicher (B1, B2, ..., BN) der GSM-Basisstation (N2) zwischengespeichert werden, bis die GSM-Basisstation (N2) die Echtzeitdaten der Pakete (P1, P2, ..., PN) zu jeweiligen vorgeplanten Übertragungszeiten an ein empfangendes Endgerät (MS1, MS2, ..., MSN) senden.

10. Ein zentraler Scheduler (CS) zum Unterstützen einer Übertragung von Paketen (P1, P2, ..., PN) in entsprechenden Kanälen (C₁, C₂, ..., C_{N}) über ein paketbasiertes Netzwerk (NET) von einem ersten Knoten (N1) an einen zweiten Knoten (N2) zu definierten Sendezeitpunkten, wobei ein jedes der Pakete (P1, P2, ..., PN) Echtzeit-Nutzdaten mindestens einer von zwei oder mehreren Echtzeitverbindungen (RTC₁, RTC₂, ..., RTC_{N}), transportiert, wobei die Pakete (P1, P2, ..., PN), wenn sie nach den jeweiligen Übertragungszeiten über das Netzwerk (NET) zu entsprechenden Ankunftszeitpunkten an dem zweiten Knoten (N2) eintreffen, während entsprechenden Pufferzeiten warten müssen, bis der zweite Knoten (N2) die Echtzeitdaten der Pakete (P1, P2, ..., PN) zu den jeweiligen vorgeplanten Verarbeitungszeiten weiterleitet, **dadurch gekennzeichnet,**
**dass** der zentrale Scheduler (CS) eine Steuereinheit (CU) umfasst, welche dazu ausgelegt ist, Daten in Bezug auf die Anzahl von Kanälen (C₁, C₂, ..., C_{N}) und die jeweiligen mit den Kanälen (C₁, C₂, ..., C_{N}) assoziierten vorgeplanten Verarbeitungszeiten zu empfangen, die empfangenen Daten und Daten in Bezug auf die für die Kanäle (C₁, C₂, ..., C_{N}) verfügbaren Gesamtbandbreite zu analysieren, auf der Basis eines Ergebnisses der besagten Analyse einen Satz von Soll-Ankunftszeitpunkten (TATA₁, TATA₂, ..., TATA_{N}) zu erstellen, wobei zumindest einer der Soll-Ankunftszeitpunkte (TATA₁, TATA₂, ..., TATA_{N}) von den jeweiligen vorgeplanten Verarbeitungszeiten abweicht, die Zeitlagensteuerschleifen (TAL1, TAL2, ..., TALN) mit dem erstellten Satz von Soll-Ankunftszeiten (TATA₁, TATA₂, ..., TATA_{N}) zu versorgen, wobei jeder Kanal der zwei oder mehreren Kanäle (C₁, C₂, ..., C_{N}) mit einer entsprechenden der besagten Zeitlagensteuerschleifen (TAL1, TAL2, ..., TALN) assoziiert ist, so dass die Zeitlagensteuerschleifen (TAL1, TAL2, ..., TALN) den ersten Knoten (N1) mit Steuernachrichten (211, 212, ..., 21N) in Bezug auf die definierten Sendezeitpunkte versorgen, um die definierten Sendezeitpunkte derart zu ändern, dass die Ankunftszeitpunkte der zugeteilten Pakete (P1, P2, ..., PN) den Soll-Ankunftszeitpunken (TATA₁, TATA₂, ..., TATA_{N}) entsprechen.

## Revendications

1. Procédé de transmission de paquets (P1, P2, ..., PN) dans des canaux correspondants (C₁, C₂, ..., C_{N}) par l'intermédiaire d'un réseau en paquets (NET) entre un premier noeud (N1) et un deuxième noeud (N2) à des instants d'envoi définis, chacun des paquets (P1, P2, ..., PN) transportant une charge utile de données en temps réel à partir d'au moins une parmi au moins deux connexions en temps réel (RTC₁, RTC₂, RTC_{N}), les paquets (P1, P2, ..., PN), lorsqu'ils arrivent après des temps de transmission respectifs par le réseau (NET) dans le deuxième noeud (N2) à des instants d'arrivée respectifs, devant attendre les temps de mise en mémoire tampon respectifs jusqu'à ce que le deuxième noeud (N2) envoie les données en temps réel des paquets (P1, P2, ..., PN) à des temps de traitement prédéfinis respectifs,
**caractérisé en ce que**
le procédé comprend les étapes suivantes :
recevoir, au moyen d'un dispositif de planification central (CS), des données sur le nombre de canaux (C₁, C₂, ... C_{N}) et sur les temps de traitement prédéfinis respectifs associés aux canaux (C₁, C₂, ... C_{N}) ;
analyser au moyen du dispositif de planification central (CS) les données reçues et les données sur une bande passante totale disponibles pour les canaux (C₁, C₂,... C_{N}) ; sur la base d'un résultat de ladite analyse, établir au moyen du dispositif de planification central (CS) un ensemble d'instants d'arrivée cibles (TATA₁, TATA₂, TATA_{N}) dans lesquels au moins un des instants d'arrivée cibles (TATA₁, TATA₂, TATA_{N}) s'écarte des temps de traitement prédéfinis respectifs ;
envoyer, au moyen du dispositif de planification central (CS), des boucles d'alignement temporel (TAL1, TAL2, TALN) avec l'ensemble établi d'instants d'arrivée cibles (TATA₁, TATA₂, TATA_{N}), chaque canal parmi les au moins deux canaux (C₁, C₂...., C_{N}) étant associé à une boucle respective parmi lesdites boucles d'alignement temporel (TAL1, TAL2, ... TALN) ; et
fournir au premier noeud (N1), au moyen des boucles d'alignement temporel (TAL1, TAL2, TALN), des messages de commande (211, 212, ..., 21N) sur les instants d'envoi définis pour changer les instants d'envoi définis de sorte que les instants d'arrivée des paquets attribués (P1, P2, PN) correspondent aux instants d'arrivée cibles (TATA₁, TATA₂, ..., TATA_{N}).

2. Procédé selon la revendication 1,
**caractérisé en ce que**
le procédé comprend en outre l'étape suivante :
établir l'ensemble d'instants d'arrivée cibles en réduisant au minimum un retard de transmission moyenné sur l'ensemble des canaux (C₁, C₂, ... C_{N}), ledit retard de transmission étant la somme des temps de transmission respectifs et des temps de mise en mémoire tampon respectifs.

3. Procédé selon la revendication 1,
**caractérisé en ce que**
le procédé comprend en outre l'étape suivante :
établir l'ensemble d'instants d'arrivée cibles de sorte qu'un retard de transmission de chaque canal parmi les au moins deux canaux (C₁, C₂, ..., C_{N}) soit inférieur à une valeur maximum prédéfinie, ledit retard de transmission du canal étant la somme du temps de transmission respectif et du temps de mise en mémoire tampon respectif associés au canal (C₁, C₂, ..., C_{N}).

4. Procédé selon la revendication 1,
**caractérisé en ce que**
le procédé comprend en outre l'étape suivante :
établir l'ensemble d'instants d'arrivée cibles TATAᵢ pour les N canaux Cᵢ, avec i = 1, ..., N et N > 1, de sorte que l'instant d'arrivée cible TATA_{N} du canal C_{N} soit défini par TATA_{N} = LTA - δ, LTA étant un instant durant lequel les paquets de l'ensemble des canaux Cᵢ doivent arriver dans le deuxième noeud et δ est une marge nécessaire pour une gigue de retard de transmission, et les instants d'arrivée cibles TATAⱼ des canaux Cⱼ sont définis par TATAⱼ= TATAⱼ₊₁ - Yⱼ₊₁ avec j = 1, ..., N-1, Yⱼ₊₁ étant fonction d'une quantité d'octets qui sont transférés dans le canal Cⱼ₊₁.

5. Procédé selon la revendication 1,
**caractérisé en ce que**
le procédé comprend en outre l'étape suivante :
déterminer au moyen des boucles d'alignement temporel (TAL1, TAL2, ..., TALN) les messages de commande (211, 212, ..., 21N) sur les instants d'envoi définis de manière indépendante pour chaque canal (C₁, C₂,...C_{N}).

6. Procédé selon la revendication 1,
**caractérisé en ce que**
le procédé comprend en outre l'étape suivante :
rassembler les canaux (C₁, C₂, ..., C_{N}) dans plusieurs groupes en fonction des critères tels que le dernier instant d'arrivée ou le nombre d'octets par période par canal devant être transmis.

7. Procédé selon la revendication 6,
**caractérisé en ce que**
le procédé comprend en outre l'étape suivante :
rassembler les canaux (C₁, C₂, ..., C_{N}) dans plusieurs groupes dans lesquels chaque canal à l'intérieur d'un groupe présente une boucle d'alignement temporel (TAL1, TAL2, ..., TALN) indépendante ou certains canaux à l'intérieur du groupe présentent une boucle d'alignement temporel (TAL1, TAL2, ..., TALN) commune ou l'ensemble des canaux à l'intérieur du groupe sont commandés avec la même boucle d'alignement temporel (TAL1, TAL2, ..., TALN).

8. Procédé selon la revendication 1,
**caractérisé en ce que**
le procédé comprend en outre l'étape suivante :
limiter le nombre de commandes pour obtenir que les instants d'arrivée des paquets attribués (P1, P2, ..., PN) correspondent aux instants d'arrivée cibles (TATA₁, TATA₂, ..., TATA_{N}) ;
définir une période de tolérance s'étendant avant et après les instants d'arrivée cibles (TATA₁, TATA₂, ..., TATA_{N}) ; et
considérer un instant d'arrivée d'un paquet (P1, P2, ..., PN) pour correspondre à l'instant d'arrivée cible (TATA₁, TATA₂, ..., TATA_{N}) correspondant si son instant d'arrivée est compris dans ladite plage de tolérance.

9. Procédé selon la revendication 1,
**caractérisé en ce que**
le procédé comprend en outre l'étape suivante :
transmettre les paquets (P1, P2, ..., PN) par l'intermédiaire d'un réseau IP (NET) entre un transcodeur (N1) et une station émettrice/réceptrice de base (N2) dans un système de station de base d'une architecture de télécommunications mobiles, les paquets (P1, P2, ..., PN), lorsqu'ils arrivent après des temps de transmission respectifs par le réseau IP (NET) dans la station émettrice/réceptrice de base (N2) à des instants d'arrivée respectifs, étant mis en tampon pour des temps de mise en mémoire tampon respectifs dans une mémoire tampon (B1, B2, ..., BN) de la station émettrice/réceptrice de base (N2) jusqu'à ce que la station émettrice/réceptrice de base (N2) envoie les données en temps réel des paquets (P1, P2, ..., PN) selon des temps de transmission prédéfinis respectifs à un terminal récepteur (MS1, MS2, ..., MSN).

10. Dispositif de planification central (CS) pour prendre en charge une transmission de paquets (P1, P2, ..., PN) dans des canaux correspondants (C₁, C₂, ..., C_{N}) par l'intermédiaire d'un réseau en paquets (NET) entre un premier noeud (N1) et un deuxième noeud (N2) à des instants d'envoi définis, chacun des paquets (P1, P2, ..., PN) transportant une charge utile de données en temps réel à partir d'au moins une parmi au moins deux connexions en temps réel (RTC₁, RTC₂, ..., RTC_{N}), les paquets (P1, P2, ..., PN), lorsqu'ils arrivent après des temps de transmission respectifs par le réseau (NET) dans le deuxième noeud (N2) à des instants d'arrivée respectifs, devant attendre les temps de mise en mémoire tampon respectifs jusqu'à ce que le deuxième noeud (N2) envoie les données en temps réel des paquets (P1, P2, ..., PN) à des temps de traitement prédéfinis respectifs,
**caractérisé en ce que**
le dispositif de planification central (CS) comprend une unité de commande (CU) adaptée pour recevoir des données sur le nombre de canaux (C₁, C₂, ... C_{N}) et sur les temps de traitement prédéfinis respectifs associés aux canaux (C₁, C₂, ..., C_{N}), analyser les données reçues et les données sur une bande passante totale disponibles pour les canaux (C₁, C₂,.... C_{N}), en se basant sur un résultat de ladite analyse, établir un ensemble d'instants d'arrivée cibles (TATA₁, TATA₂, ..., TATA_{N}) dans lesquels au moins un des instants d'arrivée cibles (TATA₁, TATA₂, ..., TATA_{N}) s'écarte des temps de traitement prédéfinis respectifs, envoyer des boucles d'alignement temporel (TAL1, TAL2, ..., TALN) avec l'ensemble établi d'instants d'arrivée cibles (TATA₁, TATA2, ..., TATA_{N}), chaque canal parmi les au moins deux canaux (C₁, C₂, ..., C_{N}) étant associé à une boucle respective parmi lesdites boucles d'alignement temporel (TAL1, TAL2, .., TALN), pour fournir au premier noeud (N1), au moyen des boucles d'alignement temporel (TAL1, TAL2, ..., TALN), des messages de commande (211, 212, .., 21 N) sur les instants d'envoi définis pour changer les instants d'envoi définis de sorte que les instants d'arrivée des paquets attribués (P1, P2, ...., PN) correspondent aux instants d'arrivée cibles (TATA₁, TATA₂, ...., TATA_{N}).
